# EUROPÄISCHE PATENTANMELDUNG

(11) **EP 2 277 645 A1**
(43) Veröffentlichungstag der Anmeldung: **26.01.2011**
(21) Anmeldenummer: 10007500.1
(22) Anmeldetag: 20.07.2010
(51) Int. Cl.: B23B 27/14

(54) **Wendeschneidplatte**

(30) Priorität: 22.07.2009 DE 102009034481
(71) Anmelder: AS Gbr, 71665 Vaihingen/Enz (DE)
(72) Erfinder: Sadri, Ibrahimi, 71665 Vaihingen/Enz (DE); Leci, Afrim, 71665 Vaihingen/Enz (DE)
(74) Vertreter: Jeck, Anton

(57) **Zusammenfassung**

Die Erfindung betrifft eine Wendeschneidplatte (01) mit einer ersten und einer zweiten Plattenfläche (02, 03) mit jeweils gleichseitiger Dreiecksgrundform, welche ersten und zweiten Plattenflächen (02, 03) an ihnen Kanten (04, 05) durch Seitenflächen (06, 07, 08) miteinander verbunden sind. In mindestens einem Eckbereich (09) der Wendeschneidplatte (01) weist zumindest eine erste Seitenfläche (06, 07, 08) eine mit einer angrenzenden zweiten Seitenfläche (07, 08, 06) einen Winkel (α) kleiner als 60° einschließende Partie (10) auf.

## Beschreibung

### Technisches Gebiet:

Die Erfindung betrifft eine Wendeschneidplatte mit einer ersten und einer zweiten Plattenfläche (mit jeweils gleichseitiger Dreiecksgrundform, welche ersten und zweiten Plattenflächen an ihnen Kanten durch Seitenflächen miteinander verbunden sind.

### Stand der Technik:

Wendeschneidplatten, z.B. aus Hartmetall und/oder Keramik, sind allgemein bekannt beispielsweise zum Einstechen oder Gewindeschneiden, allgemein zur spanenden Bearbeitung von Werkstücken.

Beispielsweise durch EP 0 575 901 A1, DE 28 14 621 A1, sowie DE 23 09 430 B2 sind Wendeschneidplatten in Form gleichseitiger Dreiecke sowie zugehörige Halter bekannt. Eine solche Wendeschneidplatte weist parallele erste und zweite Plattenflächen in gleichseitiger Dreiecksform auf. Jede der Plattenflächen hat jeweils drei gleich lange, ein gleichseitiges Dreieck bildende Kanten. Die parallel verlaufenden Kanten der ersten und zweiten Plattenflächen sind durch Seitenflächen miteinander verbunden. Die Eckbereiche einer der Plattenflächen bilden jeweils eine Schneide. Auch können die Kanten einer der Plattenflächen jeweils eine Schneide bilden.

Durch DE 10 2006 028 062 B4 und durch DE 22 01 237 A1 sind Wendeschneidplatten bekannt, die zwar eine gleichseitige Dreiecksgrundform aufweisen, deren Kanten jedoch von der gleichseitigen Dreiecksgrundform abweichend ausgeführt sind.

Beispielsweise hat die durch DE 10 2006 028 062 B4 bekannte Wendeschneidplatte eine erste und eine zweite Plattenfläche mit gleichseitiger Dreiecksgrundform. Die ersten und zweiten Plattenflächen sind an ihnen Kanten durch Seitenflächen miteinander verbunden. An den Eckbereichen zwischen einer ersten und einer zweiten Seitenfläche ist jeweils ein eine Schneide bildender M-förmiger Schneidvorsprung angeordnet.

Beispielsweise hat die durch DE 22 01 237 A1 bekannte Wendeschneidplatte auch eine erste und eine zweite Plattenfläche mit gleichseitiger Dreiecksgrundform, welche Plattenflächen an ihnen Kanten ebenso durch Seitenflächen miteinander verbunden sind. An den Eckbereichen zwischen einer ersten und einer zweiten Seitenfläche sind die Dreieckswinkel im Bereich der Dreieckschenkelenden abstumpfende Abwinklungen angeordnet. Zentriert an zumindest eine der Plattenflächen ist wenigstens eine kleinere, im Wesentlichen ebenfalls gleichseitig dreieckige Schneidplatte mit zu den Dreieckschenkeln der Plattenfläche etwa parallel laufenden Schenkeln angesetzt, deren Außenkanten die Hauptschneiden bilden und deren in gleichsinniger Weise einseitigen Seitenflächenenden zur Bildung der Freifläche der Nebenschneide einer im Winkel angrenzenden Hauptschneide in den Bereich des etwa parallel laufenden Teils der Plattenseitenfläche hochgezogen sind.

### Technische Aufgabe der Erfindung:

Als eine Aufgabe der Erfindung kann es angesehen werden, eine Wendeschneidplatte, beispielsweise zum Einstechen und ausdrehen, allgemein zur spanenden Bearbeitung von Werkstücken, zu schaffen, welche eine gleichseitige Dreiecksgrundform aufweist.

### Offenbarung der Erfindung und deren Vorteile:

Die Aufgabe wird gelöst mit den Merkmalen des Anspruchs 1.

Bei einer Wendeschneidplatte mit einer ersten und einer zweiten Plattenfläche mit jeweils gleichseitiger Dreiecksgrundform, welche ersten und zweiten Plattenflächen an ihnen Kanten durch Seitenflächen miteinander verbunden sind, ist demnach erfindungsgemäß vorgesehen, dass zumindest in mindestens einem Eckbereich der Wendeschneidplatte eine erste Seitenfläche eine mit einer angrenzenden zweiten Seitenfläche einen Winkel kleiner als 60° einschließende Partie aufweist.

Die erfindungsgemäße Wendeschneidplatte weist gegenüber dem Stand der Technik den Vorteil auf, dass die Partie eine Anfasung bildet, wobei in Abhängigkeit davon, welche von zwei benachbarten Seitenflächen die Anfasung aufweist, die Wendeschneidplatte zur Herstellung von Rechts- oder Linksgewinde besonders geeignet ist.

Mit anderen Worten ist die Erfindung dadurch verwirklicht, indem bei einer Wendeschneidplatte mit gleichseitiger Dreiecksgrundform wenigstens eine Seitenfläche in zumindest einer Ecke einseitig gegenüber einer angrenzenden Seitenfläche unter einem Winkel kleiner 60°, beispielsweise unter einem Winkel von 40° bis 59°, angefast ist. Der zwischen der Seitenfläche und deren Partie eingeschlossene Winkel entspricht dabei dem Ergänzungswinkel zu 60°. Beträgt der zwischen der Partie der ersten Seitenfläche und der zweiten Seitenfläche eingeschlossene Winkel beispielsweise 58°, so beträgt der zwischen der Partie der ersten Seitenfläche und der ersten Seitenfläche bzw. deren Verlängerung eingeschlossene Winkel 2°. Die Anfasung kann bis kurz vor eine benachbarte Ecke reichen.

Eine vorteilhafte Ausgestaltung der Erfindung sieht vor, dass die Partie bis kurz vor eine benachbarte Ecke reichen kann, beispielsweise dass die Partie sich über etwa ein Drittel, oder über etwa die Hälfte oder über etwa zwei Drittel der Länge der ersten Seitenfläche erstreckt.

Die Partie kann über eine Stufe mit einem zumindest in seiner Verlängerung mit der zweiten Seitenfläche einen Winkel von 60° einschließenden Teil der ersten Seitenfläche verbunden sein.

Die Übergänge zwischen dem Teil der Seitenfläche und der Stufe und/oder zwischen der Stufe und der Partie können beispielsweise mit einem Radius versehen abgerundet sein.

Vorzugsweise weist in jedem Eckbereich jeweils eine erste Seitenfläche eine mit einer angrenzenden zweiten Seitenfläche einen Winkel kleiner als 60° einschließende Partie auf.

Der Eckbereich zwischen der Partie der ersten Seitenfläche und der zweiten Seitenfläche kann vorzugsweise beispielsweise mit einem Radius versehen abgerundet sein.

Der Radius kann beispielsweise im Bereich zwischen 0,05 mm bis 1,0 mm liegen. Besonders bevorzugt beträgt der Radius 0,4 mm.

Die Wendeschneidplatte kann in vorteilhafter Weise eine mittig angeordnete Öffnung zur Aufnahme einer zur Befestigung an einem Werkzeughalter vorgesehenen Verbindungsvorrichtung, beispielsweise einer Schraube, einem Klemmhalter oder dergleichen, aufweisen. Je größer diese Öffnung ist, desto kippstabiler ist die lösbare Verbindung zwischen Werkzeughalter und Wendeschneidplatte, wobei eine verbleibende Wandstärke der Wendschneideplatte zwischen der Öffnung und den Seitenflächen bzw. deren Partien so dimensioniert ist, dass sie sowohl thermischen, als auch mechanischen Belastungen während der Bearbeitung eines Werkstücks im Einsatz der Wendeschneidplatte standhält.

Die Erfindung wird nun anhand von in den Zeichnungen dargestellten Ausführungsbeispielen näher erläutert. Darin bezeichnen gleiche Bezugszeichen gleiche oder gleich wirkende Elemente. Es zeigen:
- Fig. 1: eine schematische Darstellung einer Wendeschneidplatte in perspek- tivischer Ansicht.
- Fig. 2: die Wendeschneidplatte aus Fig. 1 in einer Draufsicht.
- Fig. 3: die Wendeschneidplatte aus Fig. 2 in einer ersten Seitenansicht.
- Fig. 4: die Wendeschneidplatte aus Fig. 2 in einer zweiten Seitenansicht.
- Fig. 5: die Wendeschneidplatte aus Fig. 2 in einer dritten Seitenansicht.

- Fig. 6: eine schematische Darstellung einer an einem Werkzeughalter ange- ordneten Wendeschneidplatte in einer Seitenansicht.
- Fig. 7: den Werkzeughalter mit daran angeordneter Wendeschneidplatte aus Fig. 6 in einer Ansicht von unten.

### Wege zur Ausführung der Erfindung:

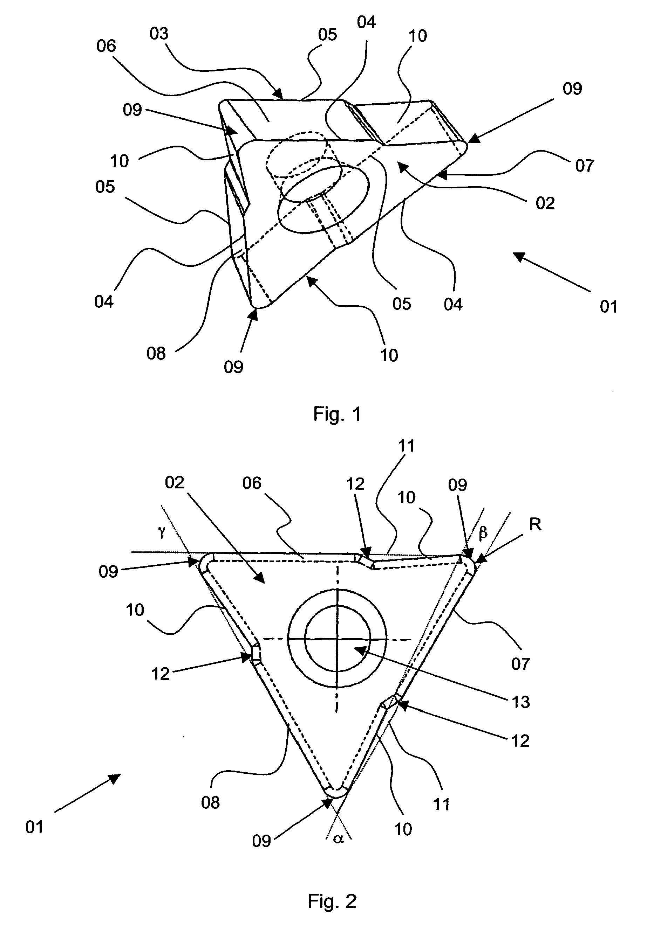

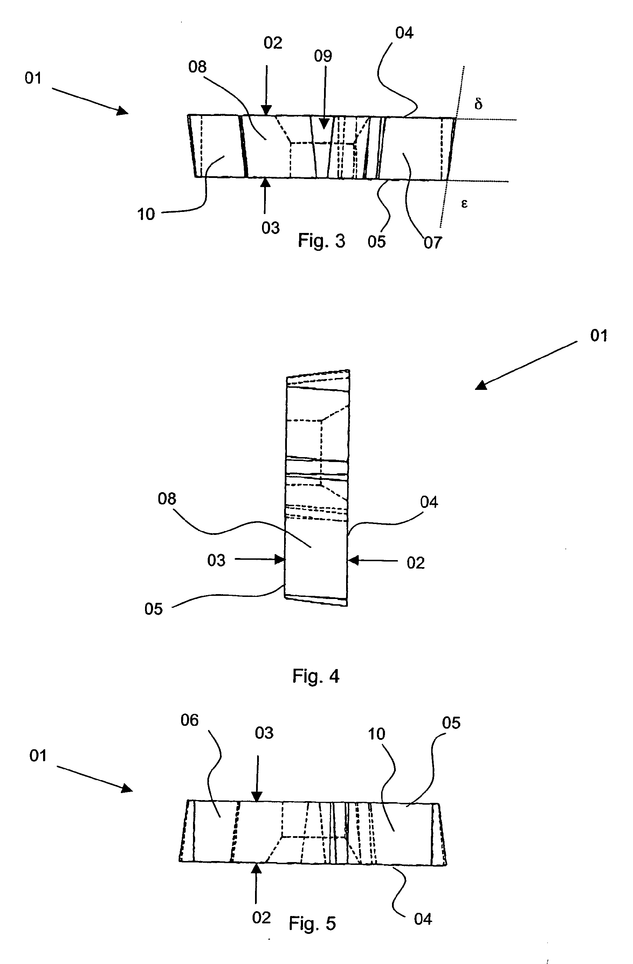

Eine in den Fig. 1 bis 5 dargestellte Wendeschneidplatte 01 weist parallele erste und zweite Plattenflächen 02, 03 mit jeweils gleichseitiger Dreiecksgrundform auf. Die ersten und zweiten Plattenflächen 02, 03 sind an ihnen Kanten 04, 05 durch Seitenflächen 06, 07, 08 miteinander verbunden. In mindestens einem Eckbereich 09 der Wendeschneidplatte 01 weist zumindest eine erste Seitenfläche 06, 07, 08 eine Anfasung 10 in Form einer mit einer angrenzenden zweiten Seitenfläche 07, 08, 06 einen Winkel α kleiner als 60° einschließenden Partie 10 auf.

Bei der in den Fig. 1 bis 5 dargestellten Wendeschneidplatte 01 weist jeder Eckbereich 09 jeweils eine Seitenfläche 06, 07, 08 mit einer mit einer angrenzenden Seitenfläche 07, 08, 06 einen Winkel α kleiner als 60° einschließenden Partie 10 auf.

Der zwischen erster Seitenfläche 06, 07, 08 bzw. deren Verlängerung 11 und der Partie 10 der ersten Seitenfläche 06, 07, 08 eingeschlossene Winkel β entspricht dabei dem Ergänzungswinkel zu 60°. Beträgt der zwischen der Partie 10 der ersten

Seitenfläche 06, 07, 08 und der zweiten Seitenfläche 07, 08, 06 eingeschlossene Winkel α beispielsweise 55°, so beträgt der zwischen der Partie 10 der ersten Seitenfläche 06, 07, 08 und der ersten Seitenfläche 06, 07, 08 bzw. deren Verlängerung 11 eingeschlossene Winkel β 5°. Die Anfasung 10 kann bis kurz vor eine benachbarte Ecke 09 reichen.

Die Partie 10 endet jeweils vor einer benachbarten Ecke 09. Die Partie 10 kann sich bevorzugt beispielsweise über etwa ein Drittel oder etwa die Hälfte oder etwa zwei Drittel der Länge der ersten Seitenfläche 06, 07, 08 erstrecken.

Die Partie 10 kann über eine Stufe 12 mit einem zumindest in seiner Verlängerung 11 mit der zweiten Seitenfläche 07, 08, 06 einen Winkel γ von 60° einschließenden Teil der ersten Seitenfläche 06, 07, 08 verbunden sein.

Die Übergänge zwischen dem Teil der ersten Seitenfläche 06, 07, 08 und der Stufe 12 sowie zwischen der Stufe 12 und der Partie 10 der ersten Seitenfläche 06, 07, 08 können ebenso wie die Eckbereiche 09 zwischen der zweiten Seitenfläche 07, 08, 06 und der Partie 10 durch einen Radius R abgerundet sein. Der Radius kann zwischen 0,05 mm und 1,0 mm, betragen. Besonders bevorzugt beträgt der Radius 0,4 mm.

Wie insbesondere in den Fig. 2, 3, 4 und 5 erkennbar ist, weisen die Plattenflächen 02, 03 zwar in einer senkrechten Projektion den Selben Mittelpunkt auf, müssen jedoch nicht gleich groß sein. Durch unterschiedliche Abmessungen der Plattenflächen 02, 03 schließen die Seitenflächen 06, 07, 08 mit den Plattenflächen 02, 03 an deren Kanten 04, 05 Winkel δ, ε ein, die ungleich 90° sind. Dies ist vorteilhaft, um mit jeweils einer der Kanten 04, 05 eine Schneide zu bilden.

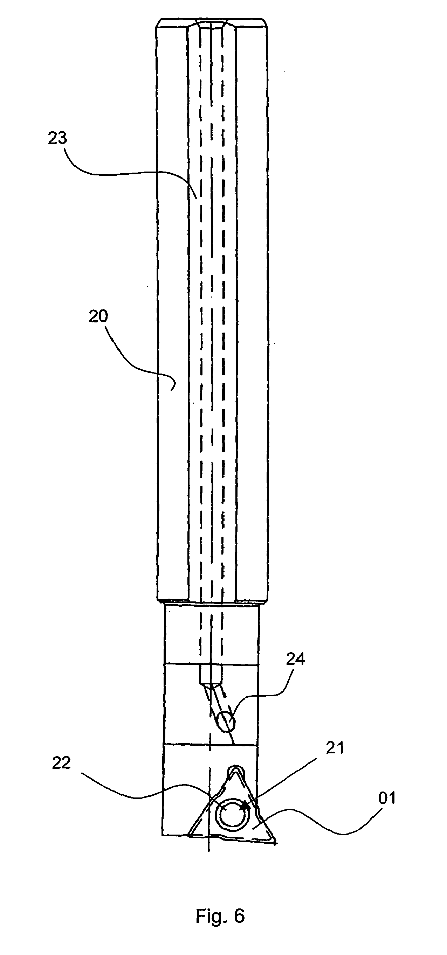

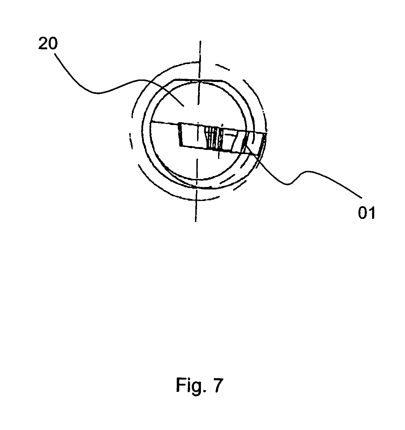

Die Wendeschneidplatte 01 kann mit einer mittig angeordneten Öffnung 13 vorgesehen sein. Die Öffnung 13 kann beispielsweise der Aufnahme einer zur Befestigung der Wendeschneidplatte 01 an einem in den Fig. 6 und 7 dargestellten Werkzeughalter 20 vorgesehenen Verbindungsvorrichtung 21, beispielsweise in Form einer durch die Öffnung 13 hindurchgehenden Schraube 22 oder einer andersartig ausgestalteten, durch die Öffnung 13 hindurch greifenden Klemmvorrichtung, wie beispielsweise einer durch EP 0 575 901 A1 bekannten Klemmvorrichtung, dienen.

Der Werkzeughalter 20 kann eine zentrale Spülöffnung 23 zur Durchleitung von Kühl- und Spülmittel an den Ort einer mit einem Werkstück in Eingriff stehenden Schneide der Wendeschneidplatte 01 aufweisen. Eine Mündung 24 der Spülöffnung 23 kann beispielsweise in einem Eckbereich 09 bzw. im Bereich einer Ecke 09 der Wendeschneidplatte 01 angeordnet sein.

### Gewerbliche Anwendbarkeit:

Die Erfindung ist insbesondere im Bereich der Herstellung und der Verwendung von Wendeschneidplatten zur spanenden Bearbeitung von Werkstücken gewerblich anwendbar.

### Bezugszeichenliste

- 01: Wendeschneidplatte
- 02: Plattenfläche
- 03: Plattenfläche
- 04: Kante der Plattenfläche 02
- 05: Kante der Plattenfläche 03
- 06: Seitenfläche
- 07: Seitenfläche
- 08: Seitenfläche
- 09: Ecke bzw. Eckbereich
- 10: Partie bzw. Anfasung
- 11: Verlängerung
- 12: Stufe
- 13: Öffnung
- 20: Werkzeughalter
- 21: Verbindungsvorrichtung
- 22: Schraube
- 23: Spülöffnung
- 24: Mündung
- R: Radius
- α: in einem Eckbereich 09 zwischen einer Partie 10 einer ersten Seitenfläche 06, 07, 08 und einer zweiten Seitenfläche 07, 08, 06 eingeschlossener Winkel.
- β: zwischen einer Seitenfläche 06, 07, 08 und deren Partie 10 eingeschlos- sener Winkel.

- γ: zwischen benachbarten Seitenflächen bzw. deren Verlängerungen 11 ein- geschlossener Winkel von 60°.
- δ: zwischen Plattenfläche 02 und Seitenfläche 06, 07, 08 eingeschlossener Winkel.
- ε: zwischen Plattenfläche 03 und Seitenfläche 06, 07, 08 eingeschlossener Winkel.

## Patentansprüche

1. Wendeschneidplatte (01) mit einer ersten und einer zweiten Plattenfläche (02, 03) mit jeweils gleichseitiger Dreiecksgrundform, welche ersten und zweiten Plattenflächen (02, 03) an ihnen Kanten (04, 05) durch Seitenflächen (06, 07, 08) miteinander verbunden sind,
**dadurch gekennzeichnet,**
**dass** zumindest eine erste Seitenfläche (06, 07, 08) in mindestens einem Eckbereich (09) der Wendeschneidplatte (01) eine mit einer angrenzenden zweiten Seitenfläche (07, 08, 06) einen Winkel (α) kleiner als 60° einschließende Partie (10) aufweist.

2. Wendeschneidplatte nach Anspruch 1,
**dadurch gekennzeichnet,**
**dass** die Partie (10) vor einer benachbarten Ecke endet.

3. Wendeschneidplatte nach Anspruch 1 oder 2,
**dadurch gekennzeichnet,**
**dass** sich die Partie (10) über etwa ein Drittel der Länge der ersten Seitenfläche (06, 07, 08) erstreckt.

4. Wendeschneidplatte nach Anspruch 1 oder 2,
**dadurch gekennzeichnet,**
**dass** sich die Partie (10) über etwa die Hälfte der Länge der ersten Seitenfläche (06, 07, 08) erstreckt.

5. Wendeschneidplatte nach Anspruch 1 oder 2,
**dadurch gekennzeichnet,**
**dass** sich die Partie (10) über etwa zwei Drittel der Länge der ersten Seitenfläche (06, 07, 08) erstreckt.

6. Wendeschneidplatte nach einem der vorhergehenden Ansprüche,
**dadurch gekennzeichnet,**
**dass** die Partie (10) über eine Stufe (12) mit einem zumindest in seiner Verlängerung (11) mit der zweiten Seitenfläche (07, 08, 06) einen Winkel (γ) von 60° einschließenden Teil der ersten Seitenfläche (06, 07, 08) verbunden ist.

7. Wendeschneidplatte nach Anspruch 6,
**dadurch gekennzeichnet,**
**dass** die Übergänge zwischen dem Teil der ersten Seitenfläche (06, 07, 08) und der Stufe (12) und/oder zwischen der Stufe (12) und der Partie (10) abgerundet sind.

8. Wendeschneidplatte nach einem der vorhergehenden Ansprüche,
**dadurch gekennzeichnet,**
**dass** der Eckbereich (09) zwischen der zweiten Seitenfläche (07, 08, 06) und der Partie (10) abgerundet ist.

9. Wendeschneidplatte nach Anspruch 7 oder 8,
**dadurch gekennzeichnet,**
**dass** die Abrundung durch einen Radius (R) hergestellt ist.

10. Wendeschneidplatte nach Anspruch 9,
**dadurch gekennzeichnet,**
**dass** der Radius (R) zwischen 0,05 mm und 1,0 mm, vorzugsweise 0,4 mm beträgt.

11. Wendeschneidplatte nach einem der vorhergehenden Ansprüche,
**dadurch gekennzeichnet,**
**dass** in jedem Eckbereich (09) jeweils eine Seitenfläche (06, 07, 08) eine mit einer angrenzenden zweiten Seitenfläche (07, 08, 06) einen Winkel (α) kleiner als 60° einschließende Partie (10) aufweist.

12. Wendeschneidplatte nach einem der vorhergehenden Ansprüche,
**gekennzeichnet durch**
eine mittig angeordnete Öffnung (13) zur Aufnahme einer zur Befestigung an einem Werkzeughalter (20) vorgesehenen Verbindungsvorrichtung (21, 22).

13. Wendeschneidplatte nach einem der vorhergehenden Ansprüche,
**dadurch gekennzeichnet,**
**dass** der in mindestens einem Eckbereich (09) zwischen der Partie (10) der ersten Seitenfläche (06, 07, 08) und einer angrenzenden zweiten Seitenfläche (07, 08, 06) eingeschlossene Winkel (α) 55° und der zumindest zwischen der Verlängerung (11) der ersten Seitenfläche (06, 07, 08) und deren Partie (10) eingeschlossene Winkel (β) 5° beträgt.
